# EUROPEAN PATENT APPLICATION

(11) **EP 4 557 394 A1**
(43) Date of publication of application: **21.05.2025**
(21) Application number: 23217415.1
(22) Date of filing: 18.12.2023
(51) Int. Cl.: H01M 4/131, H01M 4/136, H01M 4/36, H01M 4/505, H01M 4/525, H01M 4/58, H01M 10/0525, H01M 4/02

(54) **POSITIVE ELECTRODE PLATE, LITHIUM-ION BATTERY, AND ELECTRONIC DEVICE**

(30) Priority: 17.11.2023 CN 202311602318
(71) Applicant: AESC Japan Ltd., Yokohama-Shi, Kanagawa 220-0012 (JP)
(72) Inventor: QU, Yanglu, Jiangyin City, Wuxi City, 214443 (CN); XU, Yonggang, Jiangyin City, Wuxi City, 214443 (CN); RAO, Xianhui, Jiangyin City, Wuxi City, 214443 (CN)
(74) Representative: Becker, Eberhard

(57) **Abstract**

The invention provides a positive electrode plate and applications thereof. The positive electrode plate includes a positive electrode current collector, and a positive electrode active layer at least disposed on one side of the positive electrode current collector. The positive electrode active layer includes a first positive electrode active material and a second positive electrode active material. The positive electrode active layer is analyzed with a scanning electron microscope, and in a region with a test area of 50 µm × 40 µm, an area of a bright region is 10% to 70% of the test area. Through the positive electrode plate and applications thereof according to the invention, the voltage platform and the sudden increase in direct current resistance of the lithium-ion battery can be improved, and the performance of the lithium-ion battery can be enhanced.

## Description

### BACKGROUND

### Technical Field

The disclosure relates to the technical field of secondary batteries, and specifically, to a positive electrode plate and applications thereof.

### Description of Related Art

With the rapid development of lithium-ion batteries in fields of electric vehicles and large-scale energy storage, there have been higher requirements for the capacity and performance stability of lithium-ion batteries. With advantages of low costs and a long life, lithium iron phosphate batteries have become one of the mainstreams in the development of lithium-ion batteries. However, as the specific capacity of the exiting lithium iron phosphate material has approached its theoretical value, the energy density of the lithium iron phosphate battery is also close to its limit.

By replacing part of iron in lithium iron phosphate with manganese to obtain lithium manganese iron phosphate, it is possible to improve the energy density of lithium manganese iron phosphate and obtain a higher voltage platform without increasing the cost of the positive electrode active material. However, the increase in energy density is limited, and the power output tends to be unstable, which limits the development of lithium-ion batteries.

### SUMMARY

The disclosure provides a positive electrode plate and applications thereof. Through the positive electrode plate and applications thereof provided in the disclosure, it is possible to smoothen the voltage platform of the lithium-ion battery, to mitigate a sudden increase in direct current resistance in the manganese-iron conversion platform of the lithium manganese iron phosphate material, and to obtain a high-performance lithium-ion battery.

To solve the above technical problem, the disclosure provides a positive electrode plate at least including a positive electrode current collector, and a positive electrode active layer at least disposed on one side of the positive electrode current collector. The positive electrode active layer includes a first positive electrode active material and a second positive electrode active material. The positive electrode active layer is analyzed with a scanning electron microscope, and in a region with a test area of 50 µm × 40 µm, an area of a bright region is 10% to 70% of the test area.

In an embodiment of the disclosure, the first positive electrode active material includes LiMnₘFe₁₋ₘPO₄, where 0.4 ≤ m ≤ 0.7.

In an embodiment of the disclosure, the second positive electrode active material includes Li₁₊ₐ[NiₓCo_{y}M_{z}]O_{2-b}A_{b}, where 0.7 ≤ x < 1, 0 ≤ y < 0.3, 0 ≤ z < 0.3, -0.2 < a < 0.2, 0 ≤ b < 0.2, and x + y + z = 1, where an element M includes one or more of Mn, Al, Ti, Zr, Mg, Sr, W, Mo, B, V, Se, Nb, Ru, Rh, Pd, Sb, Te, Ce, Ca, Zn, Y and W, and an element A includes one or more of F, N, Cl, S and P.

In an embodiment of the disclosure, a mass of the second positive electrode active material is 5% to 95% of a total mass of the first positive electrode active material and the second positive electrode active material.

In an embodiment of the disclosure, a Dv90 of the first positive electrode active material is 1 µm to 15 µm. The Dv90 represents a particle size at which a volume accumulation from small to 90% of particle sizes in a volume-based particle size distribution.

In an embodiment of the disclosure, a Dv90 of the second positive electrode active material is 2 µm to 15 µm. The Dv90 represents a particle size at which a volume accumulation from small to 90% of particle sizes in a volume-based particle size distribution.

In an embodiment of the disclosure, the area of the bright region is 10% to 50% of the test area.

In an embodiment of the disclosure, the bright region represents a scanning electron microscope image corresponding to the second positive electrode active material

In an embodiment of the disclosure, the scanning electron microscope image is processed with an image processing software, and in a processing process, a selected area of the positive electrode active layer is the test area, and after processing with the image processing software, a region having a grayscale threshold range of 135 to 254 is the bright region.

The disclosure further provides a lithium-ion battery including the positive electrode plate described above.

The disclosure further provides an electronic device including the lithium-ion battery described above.

In summary of the above, the disclosure provides a positive electrode plate and applications thereof. By controlling the area ratio of the bright region in the scanning electron microscope image of the cross-section of the positive electrode plate, it is possible to smoothen the voltage platform of the lithium-ion battery, to mitigate the sudden increase in direct current resistance of the manganese-iron conversion platform in the lithium manganese iron phosphate material, and to stabilize the power output of the lithium-ion battery. It is possible to improve the rate performance, cycle performance, and safety performance of the lithium-ion battery and to reduce the cost of the positive electrode active material. It is possible to stabilize the output power of the lithium-ion battery, be compatible with existing battery management systems, at the same time avoid the impact of overcharging/discharging on the lifetime of the lithium-ion battery, and thus extend the service life of lithium ions of the battery. It is possible to improve the capacity, power, cycle life, and safety performance of the lithium-ion battery and obtain a high-performance lithium-ion battery.

### BRIEF DESCRIPTION OF DRAWINGS

In order to more clearly illustrate the technical solutions of the embodiments of the disclosure, the drawings required for the description of the embodiments will be briefly described below. Obviously, the drawings described below only show some embodiments of the disclosure. For those skilled in the art, other drawings may be obtained based on these drawings without creative effort.
FIG. 1 is a scanning electron microscope image of a cross-section of a positive electrode plate in an embodiment of the disclosure.
FIG. 2 is a scanning electron microscope image of a cross-section of a positive electrode plate processed with an image processing software in an embodiment of the disclosure.
FIG. 3 shows a voltage platform of a lithium-ion battery provided in Example 1.
FIG. 4 shows a voltage platform of a lithium-ion battery provided in Example 3.
FIG. 5 shows a direct current resistance of the lithium-ion battery provided in Example 1 in different states of charge.
FIG. 6 shows a direct current resistance of a lithium-ion battery provided in Example 2 in different states of charge.
FIG. 7 shows a direct current resistance of a lithium-ion battery provided in Example 4 in different states of charge.

### DESCRIPTION OF EMBODIMENTS

The following specific examples illustrate the embodiments of the disclosure, and those skilled in the art can easily understand other advantages and effects of the disclosure based on the content disclosed in this specification. The disclosure may also be implemented or applied according to other different specific embodiments, and various details in this specification may also be modified or changed based on different viewpoints and applications without departing from the spirit of the disclosure.

It should be understood that the disclosure may be implemented in different forms and should not be interpreted as being limited to the embodiments set forth herein. Instead, illustration of these embodiments is intended to make the disclosure thorough and complete and to fully convey the scope of the disclosure to those skilled in the art.

The technical solutions of the disclosure will be further detailed with reference to the embodiments and the accompanying drawings. Obviously, the described embodiments only form a part of the embodiments of the disclosure rather than all of them. All other embodiments obtained by those skilled in the art based on the embodiments in the disclosure without making creative efforts fall within the scope of protection of the disclosure.

The disclosure provides an electronic device, which includes at least one lithium-ion battery, and the lithium-ion battery serves to provide electric energy. The electronic device may be a vehicle, a mobile phone, a portable device, a laptop, a ship, spacecraft, an electronic toy, an power tool, etc. In an embodiment of the disclosure, the vehicle is, for example, a new energy vehicle, which may be a pure electric vehicle, a hybrid vehicle, a range-extended vehicle, etc. The spacecraft includes an airplane, a rocket, a space shuttle, a spaceship, etc. The electronic toy includes a stationary or moving electronic toy, such as a game console, an electric toy car, an electric toy ship, an electric toy airplane, etc. The power tool includes an electric metal cutting tool, an electric grinding tool, an electric assembly tool, and an electric railway tool, such as an electric drill, an electric grinder, an electric wrench, an electric screwdriver, an electric hammer, an impact drill, a concrete vibrator, an electric planers, etc. The embodiments of this application do not particularly limit the electric device described above.

The disclosure further provides a lithium-ion battery, which includes a positive electrode plate, a negative electrode plate, a separator, and an electrolyte. The separator is located between the positive electrode plate and the negative electrode plate, and the electrolyte is filled between the positive electrode plate, the negative electrode plate, and the separator. The disclosure does not particularly limit the type and shape of the lithium-ion battery. In an embodiment of the disclosure, the lithium-ion battery is a primary battery or a secondary battery. The secondary battery is, for example, a soft pack battery, a hard shell battery, or a cylindrical battery. In this embodiment, a soft pack secondary battery will be described as an example, and the cell of the soft pack secondary battery is formed by stacking or winding.

The disclosure provides a positive electrode plate, which includes a positive electrode current collector and a positive electrode active layer disposed on at least one surface of the positive electrode current collector. The positive electrode active layer includes a positive electrode active material, an adhesive agent, and a conductive agent. The thickness of the positive electrode active layer is greater than 30 µm, is, for example, 60 µm to 90 µm, or is, for example, 65 µm, 68 µm, 70 µm, 75 µm, 78 µm, 80 µm, 84 µm, or 87 µm. The positive electrode active material includes a first positive electrode active material and a second positive electrode active material. The first positive electrode active material includes, for example, lithium manganese iron phosphate, and the general formula of lithium manganese iron phosphate is LiMnₘFe₁₋ₘPO₄, where 0.4 ≤ m ≤ 0.7. The second positive electrode active material includes, for example, a ternary material, and the general formula of the ternary material is, for example, Li₁₊ₐ[NiₓCo_{y}M_{z}]O_{2-b}A_{b}, where 0.7 ≤ x < 1, 0 ≤ y < 0.3, 0 ≤ z < 0.3, -0.2 < a < 0.2, 0 ≤ b < 0.2, and x + y + z = 1, where the element M includes one or more of Mn, Al, Ti, Zr, Mg, Sr, W, Mo, B, V, Se, Nb, Ru, Rh, Pd, Sb, Te, Ce, Ca, Zn, Y, and W, and the element A includes one or more of F, N, Cl, S, and P. With the first positive electrode active material and the second positive electrode active material provided, the second positive electrode active material can improve the energy density of the positive electrode plate, and the first positive electrode active material can improve the rate performance, cycle performance, and safety performance of the lithium-ion battery and at the same time reduce the cost of the positive electrode active material compared to the case of being purely composed of the second positive electrode active material.

In an embodiment of the disclosure, the positive electrode current collector may be, for example, a foil material of nickel, titanium, aluminum, silver, stainless steel, or carbon, etc., after undergoing a surface treatment. Other than a foil material, any one or a combination of multiple forms, such as a film-like material, a net-like material, a porous material, a foam material, or a non-woven fabric material may be adopted as the positive electrode current collector. The thickness of the positive electrode current collector is, for example, 8 µm to 15 µm. In an embodiment of the disclosure, the positive electrode current collector is, for example, an aluminum foil.

In an embodiment of the disclosure, the adhesive agent is selected from, for example, any one or more of polyvinylidene fluoride (PVDF), polyamide (PA), polyacrylonitrile (PAN), polyacrylate, polyvinyl ether, polymethyl methacrylate (PMMA), ethylene-propylene-diene monomer (EPDM), polyhexafluoropropylene, or polymerized styrene butadiene rubber (SBR). The conductive agent is selected from, for example, any one or more of conductive carbon black (Super P, SP), acetylene black, carbon nanotubes, and graphene.

In an embodiment of the disclosure, the positive electrode active material is, for example, a mixture of LiMnₘFe₁₋ₘPO₄ and LiNiₓCo_{y}Mn_{z}O₂, where 0.4 ≤ m ≤ 0.7, 0.7 ≤ x < 1, 0 ≤ y < 0.3, and 0 ≤ z < 0.3. The adhesive agent is, for example, polyvinylidene fluoride, and the conductive agent is, for example, acetylene black. After mixing the positive electrode active material, acetylene black, and polyvinylidene fluoride, for example, at a mass ratio of 95:3:2, an organic solvent is added and stirred until the system is uniform to obtain a positive electrode slurry. The organic solvent is selected from, for example, N-methylpyrrolidone (NMP). After evenly coating the positive electrode slurry on the aluminum foil and performing drying, the dried aluminum foil is subjected to processes such as cold pressing to obtain a positive electrode plate.

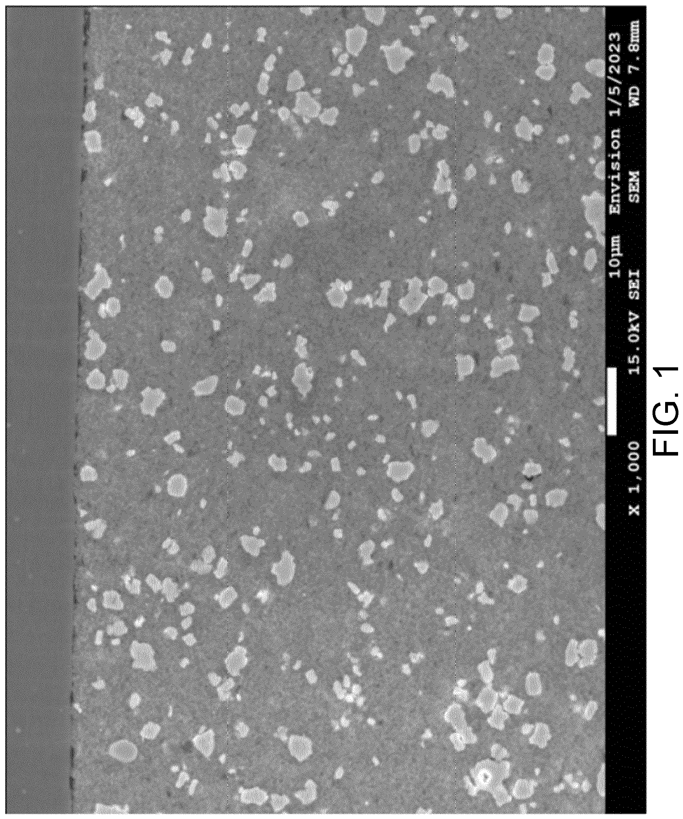

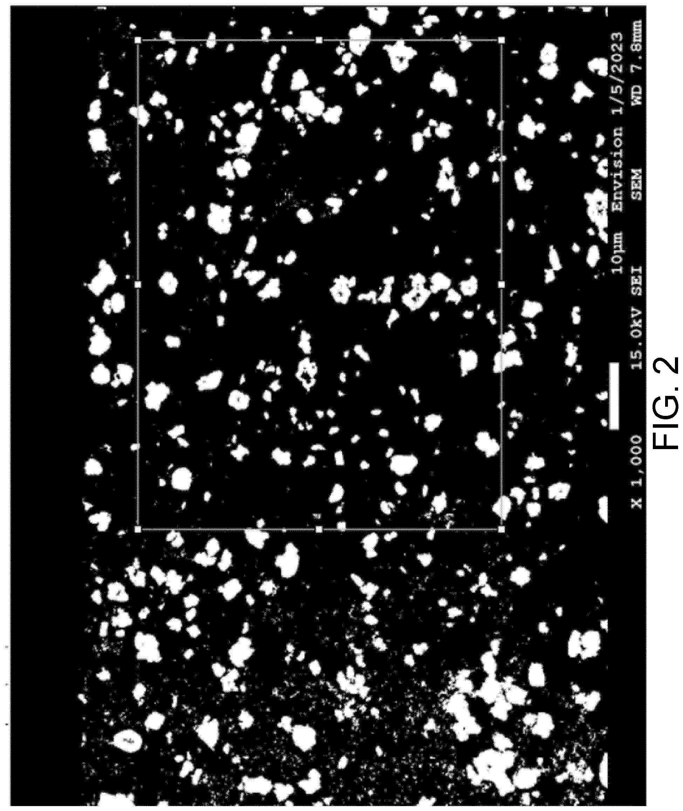

Referring to FIG. 1 to FIG. 2, in an embodiment of the disclosure, the positive electrode plate is, for example, cut with scissors to obtain a sample with dimensions of, for example, 2 × 5 mm². The cut surface of the sample is polished to reduce adverse effects resulting from cutting. For example, the cut surface of the sample is treated with ion milling, for example, by treating the cut surface directly with a beam for 30 min to 60 min. The treated sample is placed in a scanning electron microscope for testing to obtain a scanning electron microscope image of the positive electrode active layer in the cross-section of the positive electrode plate. In the scanning electron microscope image of the positive electrode active layer in the cross-section of the positive electrode plate, there are two grayscale levels (i.e., a bright region and a dark region, with a clear contrast). The obvious white bright region is the "bright region", and the rest is the "dark region". In this embodiment, the scanning electron microscope image is processed with an image processing software such as Image J software to measure an area ratio of the bright region in the scanning electron image of the cross-section of the positive electrode plate, or the area ratio may also be measured by any device or process known in the relevant field. In an embodiment of the disclosure, in the processing process of Image J software, a selected area of the positive electrode active layer is the test area. In this embodiment, the test area is, for example, an area of 50 µm × 40 µm. After processing with the image processing software, a region having a grayscale threshold range of 135 to 254 is defined as the bright region, and the rest is defined as the dark region. In an embodiment of the disclosure, in the scanning electron microscope image, the area of the bright region is 10% to 70% of the test area, for example, 10% to 50% of the test area, or, for example, 12% to 32% of the test area.

In an embodiment of the disclosure, in the scanning electron microscope image of the cross-section of the positive electrode plate, the component mainly composed of the second positive electrode active material corresponds to the bright region in the scanning electron microscope image, and the component mainly composed of the first positive electrode active material corresponds to the dark region in the scanning electron microscope image. The dark region may further include regions corresponding to the conductive agent, the adhesive agent, or voids. By controlling the area ratio of the bright region, it is possible to smoothen the voltage platform of the lithium-ion battery, to mitigate a sudden increase in the direct current resistance (DCR) of the manganese-iron conversion platform of LMFP, and to stabilize the power output of the lithium-ion battery.

In an embodiment of the disclosure, in the positive electrode active material, the mass of the second positive electrode active material is, for example, 5% to 95% of the total mass of the first positive electrode active material and the second positive electrode active material, and the remainder is the first positive electrode active material. That is, the mass of the second positive electrode active material is, for example, 5% to 95% of the total mass of the positive electrode active material. Further, the mass of the second positive electrode active material is, for example, 25% to 75% of the total mass of the positive electrode active material, or, for example, 30%, 50%, or 70% of the total mass of the positive electrode active material. By adjusting the ratio of the mass of the second positive electrode active material in the total mass of the positive electrode active material, it is possible to control the area ratio of the bright region in the formed positive electrode plate to thus improve the performance of the lithium-ion battery.

In an embodiment of the disclosure, the Dv90 of the first positive electrode active material is controlled to be, for example, 1 µm to 15 µm, or, for example, 2 µm to 10 µm. The Dv90 of the second positive electrode active material is controlled to be, for example, 2 µm to 15 µm, or, for example, 3 µm to 8 µm. Herein, the Dv90 refers to a particle size at which the volume accumulation from small to 90% of particle sizes in a volume-based particle size distribution. By controlling the Dv90 of the first positive electrode active material and the second positive electrode active material, it is possible to create different agglomeration properties between different active materials to thus control the area ratio of the bright region in the formed positive electrode plate and improve performances of the lithium-ion battery such as the voltage platform and the direct current resistance.

In an embodiment of the disclosure, the negative electrode plate includes, for example, a negative electrode current collector and a negative electrode active layer coated on at least one surface of the negative electrode current collector. The negative electrode active layer includes a negative electrode active material, an adhesive agent, a conductive agent, and a thickener. The negative electrode current collector is selected from, for example, one of a copper foil current collector, a composite copper foil current collector, a carbon current collector, a copper foam current collector, or a stainless steel current collector. The thickness of the negative electrode current collector is, for example, 8 µm to 15 µm. In an embodiment of the disclosure, the negative electrode current collector is, for example, a copper foil.

In an embodiment of the disclosure, the negative electrode active material is selected from, for example, any one or a combination of at least two of soft carbon, hard carbon, artificial graphite, natural graphite, silicon, silicon oxide compound, silicon carbide compound, or lithium titanate. The adhesive agent is selected from, for example, any one or more of polyvinylidene fluoride, polyamide, polypropylene, polyacrylate, polyvinyl ether, polymethyl methacrylate, polyhexafluoropropylene, or polymerized styrene butadiene rubber. The conductive agent is selected from, for example, any one or more of conductive carbon black, acetylene black, carbon nanotubes, and graphene. In an embodiment of the disclosure, the negative electrode current collector is selected from, for example, a copper foil, the negative electrode active material is selected from, for example, graphite, the conductive agent is selected from, for example, acetylene black, the adhesive agent is selected from, for example, polymerized styrene butadiene rubber, and the thickener is selected from, for example, sodium carboxymethyl cellulose. In an embodiment of the disclosure, graphite, acetylene black, polymerized styrene butadiene rubber, and sodium carboxymethyl cellulose are mixed at a mass ratio of 96:2:1:1, deionized water is added, and the mixture is thoroughly stirred to obtain a negative electrode slurry. The negative electrode slurry is evenly coated on the copper foil, and subjected to processes such as drying and cold pressing to obtain a negative electrode plate.

In an embodiment of the disclosure, the separator is, for example, a polyethylene (PE) film, a polypropylene (PP) film, a glass fiber film, or a composite film. The thickness of the separator is, for example, 9 µm to 15µm. In an embodiment of the disclosure, polyethylene with a thickness of 8 µm to 10 µm, for example, is selected as the base film of the separator, and a nano-alumina coating with a thickness of 2 µm to 4 µm is coated on the base film to obtain the separator.

In an embodiment of the disclosure, the electrolyte at least includes a non-aqueous solvent and a lithium salt. The non-aqueous solvent includes, for example, any one or a combination of at least two of dimethyl carbonate (DMC), ethyl methyl carbonate (EMC), ethylene carbonate (EC), propylene carbonate (PC), or diethyl carbonate (DEC). In an embodiment of the disclosure, a mass content of the non-aqueous solvent in the electrolyte is, for example, 60% to 85%. In an embodiment of the disclosure, the lithium salt is selected from, for example, any one or a combination of at least two of lithium hexafluorophosphate (LiPF₆), lithium tetrafluoroborate (LiBF₄), lithium bis(fluorosulfonyl)imide (LiFSI), lithium bis(trifluoromethanesulfonyl)imide (LiTFSI), lithium bis(oxalato)borate (LiBOB), lithium bis-oxalate difluorophosphate (LiODFP), lithium difluoro(oxalato)borate (LiODFB), lithium difluorophosphate (LiPO₂F₂), or lithium trifluoromethanesulfonate (LiCF₃SO₃). In an embodiment of the disclosure, the concentration of the lithium salt in the electrolyte is 0.1 mol/L to 2 mol/L. In an embodiment of the disclosure, the electrolyte further includes, for example, an additive. The additive includes, for example, at least one of film-forming additives such as 1,3-propanesultone (PS), fluoroethylene carbonate (FEC), or vinylene carbonate (VC). A mass content of the additive in the electrolyte is 0.1 wt% to 15 wt%. In an embodiment of the disclosure, the electrolyte is selected from, for example, any suitable commercial electrolyte.

In an embodiment of the disclosure, the positive electrode plate, the separator, and the negative electrode plate as described above are stacked in order, with the separator placed between the positive electrode plate and the negative electrode plate to provide separation. Upon stacking or winding, a bare cell is obtained. The bare cell is then placed into an aluminum-plastic film, and after baking to remove water, the electrolyte is injected and sealing is performed. After processes such as standing, hot and cold pressing, battery formation, clamping, and capacity grading are performed, the lithium-ion battery as a finished product is obtained.

The disclosure will be illustrated in more detail with reference to the following examples. These examples should not be understood as being restrictive. Appropriate modifications may be made within the scope consistent with the spirit of the disclosure, and all of such modifications fall within the technical scope of the disclosure.

### Example 1

Preparation of positive electrode plate: The positive electrode active material was LiMn_{0.6}Fe_{0.4}PO₄, and the Dv90 of LiMn_{0.6}Fe_{0.4}PO₄ was 2.10 µm. The positive electrode active material, the conductive agent which was acetylene black, and the adhesive agent which was polyvinylidene fluoride were mixed at a mass ratio of 95:3:2. After the positive electrode active material, the adhesive agent, and the conductive agent were mixed uniformly, the solvent which was N-methylpyrrolidone was added, and stirred until the mixture became uniformly transparent, to obtain the positive electrode slurry. The positive electrode slurry was evenly coated on the aluminum foil, dried, and then cold-pressed to obtain the positive electrode plate. In the scanning electron microscope image of the cross-section of the positive electrode plate, the area of the bright region was 1% of the test area.

Preparation of negative electrode plate: The negative electrode active material which was graphite, the conductive agent which was acetylene black, the adhesive agent which was polymerized styrene butadiene rubber, and the thickener which was sodium carboxymethyl cellulose were mixed at a mass ratio of 96:2:1:1. Deionized water was added and thoroughly stirred to obtain the negative electrode slurry. The negative electrode slurry was evenly coated on the copper foil, dried, and cold-pressed to obtain the negative electrode plate.

Preparation of electrolyte: Under conditions that the nitrogen content in the glove box was 99.999%, the actual oxygen content in the glove box was 0.1 ppm, and the water content was 0.1 ppm, the non-aqueous solvent was composed of ethylene carbonate, ethyl methyl carbonate, and diethyl carbonate at a mass ratio of 2:4:4. The lithium salt which was lithium hexafluorophosphate was added, and the concentration of the lithium salt was 1 mol/L. Based on 100% of the total mass of the electrolyte, 3% of VC was added to the electrolyte to obtain the electrolyte.

Selection of separator: Polyethylene with a thickness of 9 µm was selected as the base film, and a 3 µm nano-alumina coating was coated on the base film to obtain the separator.

Preparation of battery: The positive electrode plate, the separator, and the negative electrode plate were stacked in order, with the separator placed between the positive electrode plate and the negative electrode plate to provide separation. Upon stacking, a bare cell was obtained. The bare cell was then wrapped with an aluminum-plastic film, and after drying to remove water, the electrolyte was injected and sealing was performed. After processes such as standing, hot and cold pressing, battery formation, clamping, and capacity grading were performed, the lithium-ion battery was obtained.

### Example 2

The positive electrode active material was a mixture of LiMn_{0.6}Fe_{0.4}PO₄ and LiNi_{0.8}Co_{0.1}Mn_{0.1}O₂, the Dv90 of LiMn_{0.6}Fe_{0.4}PO₄ was 2.10 µm, the Dv90 of LiNi_{0.8}Co_{0.1}Mn_{0.1}O₂ was 5.20 µm, and the mass ratio of LiMn_{0.6}Fe_{0.4}PO₄ to LiNi_{0.8}Co_{0.1}Mn_{0.1}O₂ was 8:2. In the scanning electron microscope image of the cross-section of the obtained positive electrode plate, the area of the bright region was 12% of the test area. The other steps were consistent with Example 1.

### Example 3

The positive electrode active material was a mixture of LiMn_{0.6}Fe_{0.4}PO₄ and LiNi_{0.8}Co_{0.1}Mn_{0.1}O₂, the Dv90 of LiMn_{0.6}Fe_{0.4}PO₄ was 2.10 µm, the Dv90 of LiNi_{0.8}Co_{0.1}Mn_{0.1}O₂ was 5.0 µm, and the mass ratio of LiMn_{0.6}Fe_{0.4}PO₄ to LiNi_{0.8}Co_{0.1}Mn_{0.1}O₂ was 8:2. In the scanning electron microscope image of the cross-section of the obtained positive electrode plate, the area of the bright region was 13% of the test area. The other steps were consistent with Example 1.

### Example 4

The positive electrode active material was a mixture of LiMn_{0.6}Fe_{0.4}PO₄ and LiNi_{0.8}Co_{0.1}Mn_{0.1}O₂, the Dv90 of LiMn_{0.6}Fe_{0.4}PO₄ was 2.10 µm, the Dv90 of LiNi_{0.8}Co_{0.1}Mn_{0.1}O₂ was 5.20 µm, and the mass ratio of LiMn_{0.6}Fe_{0.4}PO₄ to LiNi_{0.8}Co_{0.1}Mn_{0.1}O₂ was 7:3. In the scanning electron microscope image of the cross-section of the obtained positive electrode plate, the area of the bright region was 18% of the test area. The other steps were consistent with Example 1.

In the disclosure, performance tests were conducted on the lithium-ion batteries obtained in Example 1 to Example 4. For example, the voltage platform of the lithium-ion battery and the DCR of the lithium-ion battery in different states of charge (SOC) were tested. In an embodiment of the disclosure, the voltage platform test is conducted by charging at a constant current of 0.33 C to 4.2 V, charging at a constant voltage to a cut-off current of 0.05 C, standing for 30 minutes, and then discharging at a constant current of 0.33 C to 2.5 V to 2.8 V to obtain the curve. In an embodiment of the disclosure, the DCR test of the lithium-ion battery in different SOC is conducted by charging at a constant current of 0.33 C to 4.2 V, charging at a constant voltage to the cut-off current of 0.05 C, standing for 30 minutes, then discharging at a constant current of 0.33 C to a given SOC, standing for a sufficient time, and then discharging at a current of 1 C for 10 seconds to record the DCR. Herein, 1 C represents the rated capacity of the lithium-ion battery.

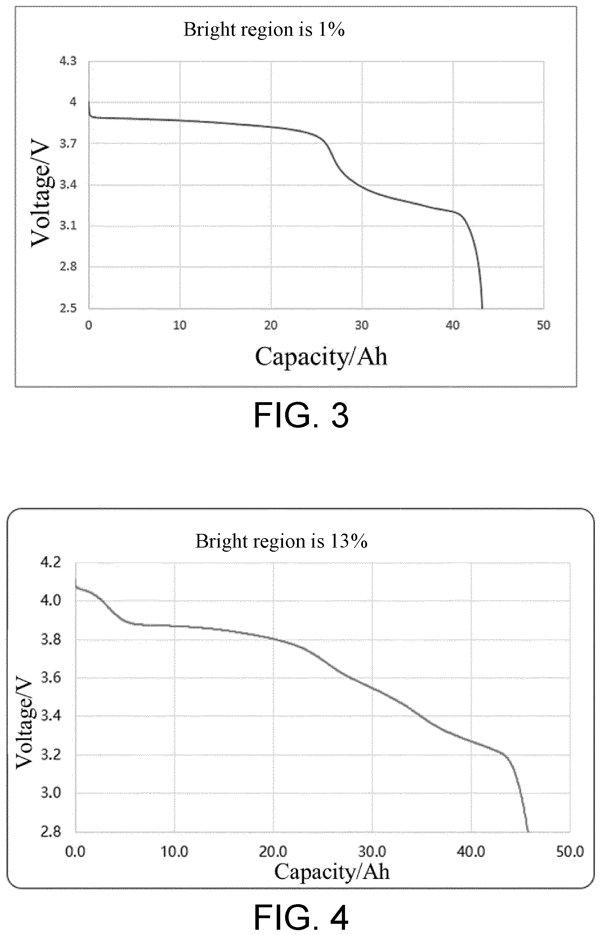

Referring to FIG. 3 and FIG. 4, FIG. 3 and FIG. 4 respectively show the voltage platforms of the lithium-ion batteries in Example 1 and Example 3. When the positive electrode active material was LiMn_{0.6}Fe_{0.4}PO₄, the lithium-ion battery exhibited two voltage platforms near 3.8 V and 3.3 V, and there was a sudden voltage drop in the discharge process, which led to unstable power output. As can be learned from FIG. 3 and FIG. 4, as the area of the bright region in the scanning electron microscope image of the cross-section of the positive electrode plate increases, the voltage platform of the obtained lithium-ion battery is high, and the discharge platform becomes smooth, which makes it possible to stabilize the output power of the lithium-ion battery, be compatible with existing battery management systems, at the same time avoid the impact of overcharging/discharging on the lifetime of the lithium-ion battery, and thus extend the service life of lithium ions of the battery.

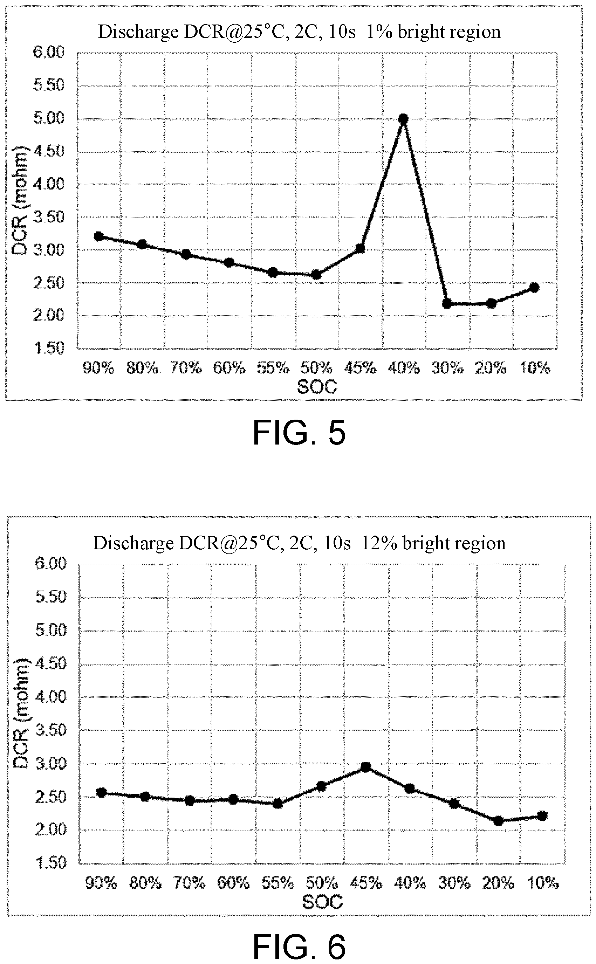

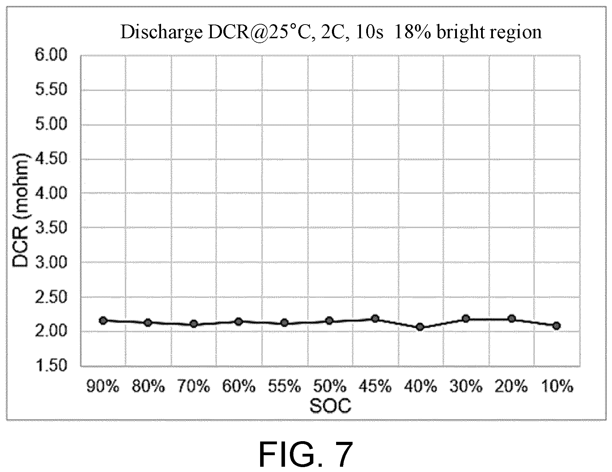

Referring to FIG. 5 to FIG. 7, FIG. 5 to FIG. 7 respectively show the direct current resistance of the lithium-ion batteries in Example 1, Example 2, and Example 4 in different states of charge. As can be learned from FIG. 5 to FIG. 7, as the area of the bright region in the scanning electron microscope image of the cross-section of the positive electrode plate increases, the direct current resistance of the lithium-ion battery in each state of charge decreases. Moreover, as the area of the bright region in the scanning electron microscope image of the cross-section of the positive electrode plate increases, the change in direct current resistance of the lithium-ion battery in different states of charge becomes gradual, that is, the sudden increase in DCR of the manganese-iron conversion platform in the first positive electrode active material is mitigated, which contributes to improving the capacity, power, cycle life, and safety performance of the lithium-ion battery, thereby obtaining a high-performance lithium-ion battery.

In summary of the above, the disclosure provides a positive electrode plate and applications thereof. By controlling the area ratio of the bright region in the scanning electron microscope image of the cross-section of the positive electrode plate, it is possible to smoothen the voltage platform of the lithium-ion battery, to mitigate the sudden increase in direct current resistance of the manganese-iron conversion platform in the lithium manganese iron phosphate material, and to stabilize the power output of the lithium-ion battery. The second positive electrode active material can increase the energy density of the positive electrode plate, and the first positive electrode active material can improve the rate performance, cycle performance, and safety performance of the lithium-ion battery and reduce the cost of the positive electrode active material. By adjusting the mass ratio of the second positive electrode active material in the total mass of the positive electrode active material, and by adjusting the Dv90 of the first positive electrode active material and the second positive electrode active material, it is possible to control the area ratio of the bright region in the formed positive electrode plate to thus improve the performance of the lithium-ion battery. It is possible to stabilize the output power of the lithium-ion battery, be compatible with existing battery management systems, at the same time avoid the impact of overcharging/discharging on the lifetime of the lithium-ion battery, and thus extend the service life of lithium ions of the battery. It is possible to improve the capacity, power, cycle life, and safety performance of the lithium-ion battery and obtain a high-performance lithium-ion battery.

## Claims

1. A positive electrode plate, at least comprising:
a positive electrode current collector; and
a positive electrode active layer at least disposed on one side of the positive electrode current collector, the positive electrode active layer comprising a first positive electrode active material and a second positive electrode active material, wherein
the positive electrode active layer is analyzed with a scanning electron microscope, and in a region with a test area of 50 µm × 40 µm, an area of a bright region is 10% to 70% of the test area.

2. The positive electrode plate according to claim 1, wherein the first positive electrode active material comprises LiMnₘFe₁₋ₘPO₄, where 0.4 ≤ m ≤ 0.7.

3. The positive electrode plate according to claim 1, wherein the second positive electrode active material comprises Li₁₊ₐ[NiₓCo_{y}M_{z}]O_{2-b}A_{b}, where 0.7 ≤ x < 1, 0 ≤ y < 0.3, 0 ≤ z < 0.3, -0.2 < a < 0.2, 0 ≤ b < 0.2, and x + y + z = 1, where an element M comprises one or more of Mn, Al, Ti, Zr, Mg, Sr, W, Mo, B, V, Se, Nb, Ru, Rh, Pd, Sb, Te, Ce, Ca, Zn, Y and W, and an element A comprises one or more of F, N, Cl, S and P.

4. The positive electrode plate according to claim 1, wherein a mass of the second positive electrode active material is 5% to 95% of a total mass of the first positive electrode active material and the second positive electrode active material.

5. The positive electrode plate according to claim 1, wherein a Dv90 of the first positive electrode active material is 1 µm to 15 µm, and
the Dv90 represents a particle size at which a volume accumulation from small to 90% of particle sizes in a volume-based particle size distribution.

6. The positive electrode plate according to claim 1, wherein a Dv90 of the second positive electrode active material is 2 µm to 15 µm, and
the Dv90 represents a particle size at which a volume accumulation from small to 90% of particle sizes in a volume-based particle size distribution.

7. The positive electrode plate according to claim 1, wherein the area of the bright region is 10% to 50% of the test area.

8. The positive electrode plate according to claim 1, wherein the bright region represents a scanning electron microscope image corresponding to the second positive electrode active material.

9. The positive electrode plate according to claim 8, wherein the scanning electron microscope image is processed with an image processing software, and in a processing process, a selected area of the positive electrode active layer is the test area, and after processing with the image processing software, a region having a grayscale threshold range of 135 to 254 is the bright region.

10. A lithium-ion battery comprising the positive electrode plate according to any one of claims 1 to 9.

11. An electronic device comprising the lithium-ion battery according to claim 10.

## Amended claims

### Amended claims in accordance with Rule 137(2) EPC.

1. A positive electrode plate, at least comprising:
a positive electrode current collector; and
a positive electrode active layer at least disposed on one side of the positive electrode current collector, the positive electrode active layer comprising a first positive electrode active material and a second positive electrode active material, wherein
the first positive electrode active material comprises LiMnₘFe₁₋ₘPO₄, where 0.4 ≤ m ≤ 0.7, wherein a Dv90 of the first positive electrode active material is 1 µm to 15 µm,
the second positive electrode active material comprises Li₁₊ₐ[NiₓCo_{y}M_{z}]O_{2-b}A_{b}, where 0.7 ≤ x < 1, 0 ≤ y < 0.3, 0 ≤ z < 0.3, -0.2 < a < 0.2, 0 ≤ b < 0.2, and x + y + z = 1, where an element M comprises one or more of Mn, Al, Ti, Zr, Mg, Sr, W, Mo, B, V, Se, Nb, Ru, Rh, Pd, Sb, Te, Ce, Ca, Zn, Y and W, and an element A comprises one or more of F, N, Cl, S and P, wherein a Dv90 of the second positive electrode active material is 2 µm to 15 µm, and
the Dv90 represents a particle size at which a volume accumulation from small to 90% of particle sizes in a volume-based particle size distribution,
the positive electrode active layer is analyzed with a scanning electron microscope, and in a region with a test area of 50 µm × 40 µm, an area of a bright region is 10% to 70% of the test area,
wherein the bright region represents a scanning electron microscope image corresponding to the second positive electrode active material, and wherein the scanning electron microscope image is processed with an image processing software of Image J software to measure an area ratio of the bright region in the scanning electron image of a cross-section of the positive electrode plate, and after processing with the image processing software, a region having a grayscale threshold range of 135 to 254 is defined as the bright region, and the rest is defined as the dark region.

2. The positive electrode plate according to claim 1, wherein a mass of the second positive electrode active material is 5% to 95% of a total mass of the first positive electrode active material and the second positive electrode active material.

3. The positive electrode plate according to claim 1, wherein the area of the bright region is 10% to 50% of the test area.

4. A lithium-ion battery comprising the positive electrode plate according to any one of claims 1 to 3.

5. An electronic device comprising the lithium-ion battery according to claim 4.
